# EUROPEAN PATENT APPLICATION

(11) **EP 3 346 642 A1**
(43) Date of publication of application: **11.07.2018**
(21) Application number: 16840626.2
(22) Date of filing: 26.05.2016
(51) Int. Cl.: H04L 12/24

(54) **METHOD AND DEVICE FOR MANAGING NETWORK ELEMENT MODEL**

(30) Priority: 02.09.2015 CN 201510555766
(71) Applicant: ZTE Corporation, Shenzhen, Guangdong 518057 (CN)
(72) Inventor: XIONG, Yong, Shenzhen Guangdong 518057 (CN)
(74) Representative: Lavoix
(86) International application number: PCT/CN2016/083530
(87) International publication number: WO 2017/036197

(57) **Abstract**

Provided are a method and device for managing a network element model. The method for managing a network element model comprises: uploading a preset network element model package; determining, according to a preset rule, whether to introduce the network element model package; and determining introduction of the network element model package, and updating a preset database to generate a network element model file required by a client. The above method enables decoupling of a network management system version and a network element version so that a network management system and a network element model can be developed and operated independently. Therefore, the network element model does not have to be taken into consideration in a development stage of the network management system, nor should the network management system be upgraded before update of the network element model.

## Description

### TECHNICAL FIELD

The disclosure relates to, but not limited to the field of communications, and in particular to a method for managing network element models and apparatus.

### BACKGROUND

In a telecommunication network management system in the related art, all network element model versions can be supported by a network management system have been already embedded into the network management system in a development stage of the network management system. Therefore, when the network management system in the related art manages a network element model, a newly-developed network element model version cannot be imported. In the related art, in order to adapt to the change of a network element, the network management system has to develop a corresponding network element model version. For example, it is necessary to create a new field for a newly-added configuration parameter in a database table, or to write a new code for a newly-added constraint relationship. That is to say, a network management system version in the related art is coupled to a network element version, and this coupling may bring the following adverse effects: it is necessary to determine the network management system version according to the network element version in the development stage, and a version plan cannot be made independently; it is necessary to upgrade a network management system before upgrade of a network element during operation in an operation stage, and therefore additional working is required for upgrade of the network element; and moreover, when the network management system is upgraded, an upgrade process is complex and high in cost.

### SUMMARY

The following is a brief introduction for a subject described herein in detail. The brief introduction is not intended to restrict the scope of protection of claims.

The disclosure provides a method and apparatus for managing network element models, which can solve the problem in the related art that it is necessary to upgrade a network management system together with a network element version during upgrade of the network element version due to a relationship between the network management system version and the network element version.

To solve the above-mentioned technical problem, the disclosure provides a method for managing network element models, including the operations as follows.

A preset network element model package is uploaded.

It is determined, according to a preset rule, whether to import the network element model package.

It is determined to import the network element model package, a preset database is updated, and a network element model file required by a client is generated.

In one embodiment of the disclosure, the network element model package includes: a description file of network element models, a description file of the network element model package and a description file of an import behavior of the network element model package.

In one embodiment of the disclosure, the preset database includes: at least one Managed Object Class (MOC) database table, the MOC database table including information about the imported network element models belonging to a same MOC.

In one embodiment of the disclosure, the step that a preset database is updated includes: information about each MOC in the network element model package is extracted; and for information about each MOC, it is judged whether a corresponding MOC database table is present in the database, when the corresponding MOC database table is not present in the database, information about each attribute of the MOC is acquired from the network element model package, and the corresponding MOC database table is created; when the corresponding MOC database table is present in the database, it is checked whether a field corresponding to the information about each attribute of the MOC is present in the corresponding MOC database table, and when the field of the acquired attribute of the MOC is not present, the field is created in the corresponding MOC database table; and when the field of the acquired attribute of the MOC is present, it is checked whether a value range of the field satisfies a definition of the network element model, and if not, the value range of the field is modified.

In one embodiment of the disclosure, determination, according to a preset rule, of whether to import the network element model package includes: a description file of the network element model package in the uploaded network element model package is read to obtain version information and a patch number of a network element model, the version information is compared with a current local network element model version, and a network element model satisfying the following situations is selected for importing: when the network element model in the network element model package is not present locally, the network element model package is imported; and when the network element model in the network element model package is already present locally but the patch number in the network element model package is newer, the network element model package is imported.

In one embodiment of the disclosure, before a preset network element model package is uploaded, the method for managing network element models may further include: a selection instruction of a user is received, and a network element model package selected by the user is uploaded.

In one embodiment of the disclosure, after a network element model file required by a client is generated, the method for managing network element models may further include: a client is notified to download the network element model file; or, a downloading request of a client is received, and the network element model file is transferred to the client at the downloading request.

The disclosure additionally provides a computer-readable storage medium, storing computer-executable instructions, wherein when being executed, the computer-executable instructions implement the above-mentioned method.

The disclosure also provides an apparatus for managing network element models, including: an uploading module, a determination module and a management module.

The uploading module is arranged to upload a preset network element model package.

The determination module is arranged to determine, according to a preset rule, whether to import the network element model package.

The management module is arranged to determine to import the network element model package, update a preset database, and generate a network element model file required by a client.

In one embodiment of the disclosure, the preset database includes: at least one MOC database table, the MOC database table including information about the imported network element models belonging to a same MOC.

In one embodiment of the disclosure, the management module includes an importing module arranged to import the network element model package, an update module arranged to update the preset database, and a generation module arranged to generate the network element model file required by the client; wherein the update module includes: an extraction unit and a processing unit; the extraction unit is arranged to extract information about each MOC in the network element model package; and the processing unit is arranged to: for the information about each MOC, judge whether a corresponding MOC database table is present in the database; when no corresponding MOC database table is not present in the database, acquire information about each attribute of the MOC from the network element model package, create the corresponding MOC database table; check, when the corresponding MOC database table is present in the database, check whether a field corresponding to the information about each attribute of the MOC is present in the corresponding MOC database table, when the field of the acquired attribute of the MOC is not present, create the field in the corresponding MOC database table; when the field of the acquired attribute of the MOC is present, check whether a value range of the field satisfies a definition of the network element model, and if not modify the value range of the field.

In one embodiment of the disclosure, the determination module is arranged to read a description file of the network element model package in the uploaded network element model package to obtain version information and a patch number of a network element model, compare the version information with a current local network element model version, and select a network element model satisfying the following situations for importing: when the network element model in the network element model package is not present locally, the network element model package is imported; and if a network element model in the network element model package is already present locally but the patch number in the network element model package is newer, the network element model package is imported.

In one embodiment of the disclosure, the uploading module may further include an instruction receiving unit and an uploading unit, wherein the instruction receiving unit is arranged to receive a selection instruction of a user, and the uploading unit is arranged to upload the network element model package according to the user instruction.

In one embodiment of the disclosure, the apparatus for managing network element models may further include a downloading processing module, the downloading processing module being arranged to: notify a client to download the network element model file; or, receive a downloading request of a client, and transfer the network element model file to the client at the downloading request.

The disclosure has the beneficial effects as follows.

According to the method and apparatus for managing network element models provided by the disclosure, a network element model package determined to be imported is imported into a network management system, network management system database information corresponding to the network element model package is updated, and then each client of the network management system is notified to download and update a network element model. The method for managing network element models and apparatus enable decoupling of a network management system version and a network element version, so that the network management system and the network element models can be developed and operated independently. That is, it is unnecessary to take the network element models into consideration in the development stage of the network management system, and it is also unnecessary to upgrade the network management system before update of the network element models, thereby reducing the cost of the upgrade processes of the network management system and the network elements, and reducing workload.

After the drawings and the detailed descriptions are read and understood, other aspects may be understood.

### BRIEF DESCRIPTION OF DRAWINGS

FIG. 1 is a flowchart of a method for managing network element models according to an embodiment of the disclosure.
FIG. 2 is a flowchart showing update of a database according to an embodiment of the disclosure.
FIG. 3 is a flowchart showing rollback according to an embodiment of the disclosure.
FIG. 4 is a schematic diagram of an apparatus for managing network element models according to an embodiment of the disclosure.
FIG. 5 is a schematic diagram of an uploading module in the apparatus for managing network element models as shown in FIG. 4.
FIG. 6 is a schematic diagram of a management module in the apparatus for managing network element models as shown in FIG. 4.
FIG. 7 is a schematic diagram of an update module in the apparatus for managing network element models as shown in FIG. 4.
FIG. 8 is a schematic diagram of an apparatus for managing network element models according to another embodiment of the disclosure.
FIG. 9 is a schematic diagram of an apparatus for managing network element models according to another embodiment of the disclosure.
FIG. 10 is a schematic diagram of an apparatus for managing network element models according to another embodiment of the disclosure.

### DETAILED DESCRIPTION

In order to solve the technical problem in the related art in which a network management system and a network element cannot be independently developed and operated due to a coupling relationship therebetween, the embodiments of the disclosure provide a method for managing network element models. This method packages a description file of network element models, a description file of the network element model package and an import behavior description file of a network element model package into a network element model package. The description file of network element models describes information about network elements such as configuration parameter name, data type, value range and constraint. The description file of the network element model package describes version information of network element models in the present network element model package, and by means of description information in the description file of the network element model package, a user may understand influence on a system caused by importing of the network element model package. The description file of an import behavior of a network element model package is used for describing a file to be deleted, a source path and a destination path of a file to be copied, a database script file to be executed, and a process to be closed and/or rebooted when a network element model package is imported.

The disclosure will be further described below by means of specific implementation manners in conjunction with the drawings in detail.

### Embodiment 1:

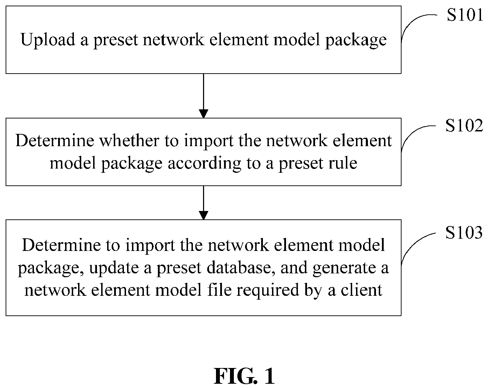

A specific process of a method for managing network element models is as shown in FIG. 1.

At S101, a preset network element model package is uploaded.

A network management system includes a server and at least one client. Generally, import of a network element model package is initiated by a certain client in the network management system. The client uploads the network element model package to the server. The client may usually upload the network element model package by using, but not limited to, a File Transfer Protocol (FTP).

In order to improve the autonomy of a user, alternatively, in the present embodiment, before the preset network element model package is uploaded, the user may perform selection and confirmation at the client, and after the user selects a network element model package to be imported from the client of the network management system, the method for managing network element models further includes: the client reads a description file of the network element model package from the network element model package selected by the user, and displays relevant information of the description file of the network element model package on a user interface to be read by the user, so that the user may understand influence on a system caused by importing of this network element model package; and after reading the relevant information of the description file of the network element model package on the display interface of the client of the network management system, the user may know relevant influences brought by import of the network element model package, and then select whether to import the network element model package.

The addition of user selection and confirmation processes mainly aims to improve the autonomy of the user, and enables the user to select a network element model package to be imported as desired, thereby avoiding import of an unnecessary network element model package by the network management system, reducing workload of the network management system, and optimizing resource configuration.

At S102, it is determined, according to a preset rule, whether to import the network element model package.

A description file of the network element model package in the uploaded network element model is read so as to obtain version information and a patch number of the network element model, the version information is compared with a current local network element model version, and a network element model satisfying the following situations is selected for importing:
if the network element model in the network element model package is not present locally, the network element model package is imported; and
if the network element model in the network element model package is already present locally but a patch number in the network element model package is newer, the network element model package is imported.

If a network element model in the network element model package is already present locally and a patch number in the network element model package is not newer than that of the local network element model, the network element model package is not imported.

At S103, it is determined to import the network element model package, a preset database is updated, and a network element model file required by a client is generated.

After a local network element model and a network element model in a network element model package to be uploaded are compared, it is confirmed that the above-mentioned network element model package should be imported, and then the network element model package is imported. The process of importing the network element model package includes the following operations.

A specified process is stopped according to the description file of the import behavior of the network element model package and the description of the network element model package, files in the network element model package are copied to a specified folder, if a file having the same name as the foregoing file is already present in a target folder, the file is overwritten by the file in the network element model package, the specified file is deleted according to the description of the network element model package, and after the above operation is completed, the stopped process is rebooted.

In S103, after the network element model package is imported, the process of updating a preset database according to information in the network element model package includes the following operations.

Firstly, information of each MOC in the network element model package is extracted.

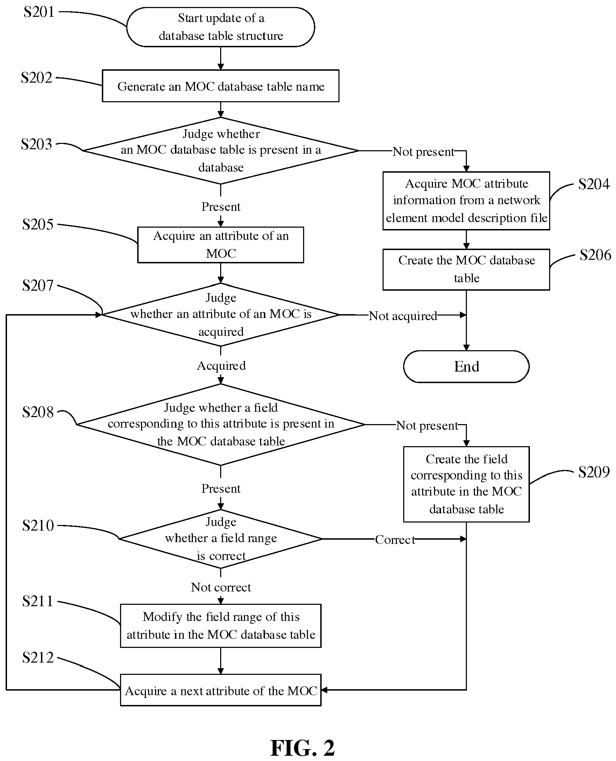

Then, the database is updated. See FIG. 2, FIG. 2 is a flowchart showing update of a database according to the disclosure.

At S201, a database table structure is updated.

At S202, a corresponding MOC database table name is generated according to extracted MOC information.

At S203, it is judged whether an MOC database table corresponding to the table name (namely, the MOC information) generated above is present in the database, if it is determined that the corresponding MOC database table is not present in the database, i.e., an MOC database table of the MOC is not present in the database, S204 is executed, and if it is determined that the corresponding MOC database table is present in the database, i.e., an MOC database table of the MOC has been already present in the database, S205 is executed.

At S204, a description file of network element models is extracted from a network element model package, information about all attributes of the above-mentioned MOC is obtained, and then S206 is executed.

At S206, the MOC database table of the above-mentioned MOC is created, and then the flow is ended.

At S205, information about an attribute of the above-mentioned MOC is acquired.

At S207, it is judged whether information about an attribute of the above-mentioned MOC is acquired (i.e., it is checked whether a field corresponding to information about each attribute of the MOC is present in the corresponding MOC database table), if it is determined that information about an attribute of the above-mentioned MOC is not acquired, it indicates that the attribute information of the MOC has been updated, and the flow is ended, and if it is determined that information about an attribute of the above-mentioned MOC is acquired, S208 is executed.

At S208, it is judged whether a field corresponding to the acquired attribute of the MOC is present in the above-mentioned MOC database table, if it is determined that a field corresponding to the acquired attribute of the MOC is not present in the above-mentioned MOC database table, S210 is executed, and if it is determined that a field corresponding to the acquired attribute of the MOC is present in the above-mentioned MOC database table, S209 is executed.

At S209, a field of the above-mentioned attribute acquired in S205 is created in the above-mentioned MOC database table, and then S212 is executed.

At S210, it is judged whether a field range of the above-mentioned attribute present in the above-mentioned MOC database table is correct, if it is determined that a field range of the above-mentioned attribute present in the above-mentioned MOC database table is correct, S212 is executed, and if it is determined that a field range of the above-mentioned attribute present in the above-mentioned MOC database table is not correct, S211 is executed.

At S211, the field range of the attribute in the MOC database table is modified, and then S212 is executed.

At S212, a next attribute of the MOC is acquired, and then S207 is executed until an attribute of the MOC cannot be continuously acquired. That is, it indicates that the attribute information of the MOC has been updated completely, and the flow is ended.

Alternatively, the preset database contains at least one MOC database table, and the same MOC data for each of imported network element models are stored in the same MOC database table.

After update of the preset database is completed, a network element model file required by a client, client_mo_model.zip, will be generated. Undoubtedly, the network element model file required by the client is not limited to a compressed zip format. The network element model file required by the client may be a file containing a network element model imported during update, or may be a file including an original local network element model and a network element model imported during update.

Alternatively, after a network element model file required by a client is generated, the method for managing network element models further includes: a client of the network management system is notified to download the network element model file; or, when a client gives a request of downloading the network element model file required by the client, the network element model file is transferred to the client at the downloading request of the client. Here, the client may include the above-mentioned client uploading the updated network element model package.

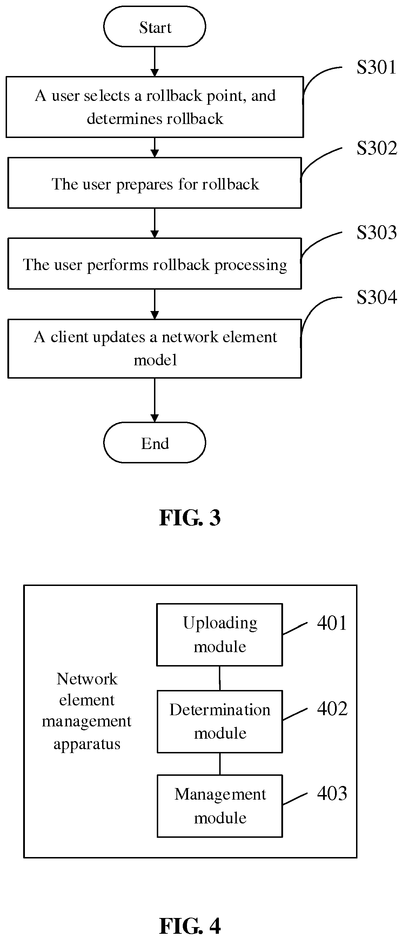

The method for managing network element models provided by the disclosure also provides a network element model rollback mechanism. See FIG. 3, FIG. 3 is a flowchart showing rollback according to the disclosure.

At S301, a user selects a rollback point, and determines rollback.

Before a new network element model package is imported, an existing network element model is stored in a folder "momodel", and when the new network element model package is imported, the folder "momodel" and "client_mo_model.zip" are compressed together into a rollback compressed file, namely, into a network element model rollback point. Obviously, the rollback point in the disclosure is not necessarily achieved in a format of a compressed file. The user may select a rollback point from multiple previous rollback points for rollback.

At S302, the user prepares for rollback.

The rollback compressed file in the rollback point selected by the user is decompressed to a temporary file, the folder "momodel" and "client_mo_model.zip" in the rollback point are analyzed, and versions of one or more network element models supported by the rollback point are determined. Then, a network element model version to be deleted during rollback is determined; if a network element corresponding to a network element model to be deleted has been operated in a network management system, rollback cannot be performed because these network elements cannot be continuously managed due to the absence of corresponding models once rollback; and if a network element model corresponding to a network element already operated must be rolled back, the network element being operated must be rolled back and deleted.

At S303, rollback is performed.

Firstly, a process is closed; then, all files and subfolders under a latest client_mo_model.zip file are deleted, files under a latest "momodel" are deleted and replaced with a file "client_mo_model.zip" and a file "momodel" in temporary files of the rollback point selected by the user; and finally, the stopped process is rebooted, and a network element model is reloaded.

At S304, a client updates the network element model.

After rollback, the client is notified to update the network element model, after the client is rebooted, the file "client_mo_model.zip" in the temporary files is obtained under an FTP, and the network element model is loaded after decompression.

A network management system includes a server and at least one client, and S102, S103, S200 to S212, and S301 to S303 are executed by the server.

The embodiments of the disclosure additionally provide a computer-readable storage medium, storing computer-executable instructions, wherein when being executed, the computer-executable instructions implement the above-mentioned method.

### Embodiment 2:

See FIG. 4, FIG. 4 is a schematic diagram of a network element management apparatus. The network element management apparatus includes an uploading module 401, a determination module 402 and a management module 403.

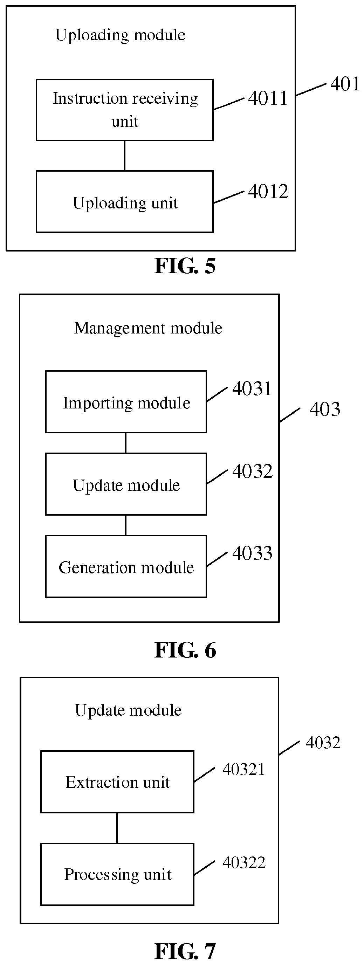

The uploading module 401 is arranged to upload a preset network element model package. See FIG. 5, alternatively, the uploading module 401 further includes an instruction receiving unit 4011 and an uploading unit 4012. The instruction receiving unit 4011 is arranged to receive a selection instruction of a user, and the uploading unit 4012 is arranged to upload the network element model package according to the selection instruction of the user. Alternatively, the network element model package may be uploaded by using an FTP, and it is to be understood that the uploading manner is not limited to the FTP uploading.

As shown in FIG. 4, the determination module 402 is arranged to determine, according to a preset rule, whether to import the network element model package. Alternatively, the determination module 402 may be arranged to read a description file of the network element model package in the uploaded network element model to obtain version information and a patch number of the network element model, compare the version information with a current local network element model version, and then select a network element model satisfying the following two situations for importing: if a network element model in the network element model package is not present locally, the network element model package is imported; and if a network element model in the network element model package is already present locally but a patch number in the network element model package is newer, the network element model package is imported. If a network element model in the network element model package is already present locally and a patch number in the network element model package is not newer than that of the local network element model, the network element model package is not imported.

See FIG. 6, the management module 403 is arranged to import the network element model package when the determination module 402 determines to import the network element model package, update a preset database according to information in the network element model package, and generate a network element model file required by a client, wherein the management module 403 includes an importing module 4031 arranged to import a network element model package, an update module 4032 arranged to update a preset database, and a generation module 4033 arranged to generate a network element model file required by a client. The importing module 4031 is arranged to stop a specified process according to the description file of the import behavior of the network element model package; copy a file in the network element model package to a specified folder; if a file having the same name as the foregoing file is already present in a target folder, overwrite the present file by the file in the network element model package; delete the specified file according to the description of the network element model package, and reboot, after the above operation is completed, the stopped process.

See FIG. 7, the update module 4032 includes an extraction unit 40321 and a processing unit 40322. The process of updating, by the update module 4032, a preset database is as follows. The extraction unit 40321 is arranged to extract information about each MOC in the network element model package. The processing unit 40322 is arranged to: judge whether an MOC database table corresponding to the information about each MOC is present in the database; if it is determined that a corresponding MOC database table is not present in the database, acquire information about each attribute of the MOC from the network element model package, create a corresponding MOC database table; if it is determined that a corresponding MOC database table is present in the database, check whether a field corresponding to the information about each attribute of the MOC is present in the corresponding MOC database table; , if when the field of the acquired attribute of the MOC is not present, create the field in the corresponding MOC database table; if the field of the acquired attribute of the MOC is present, check whether a value range of the field satisfies a definition of a network element model, and if not, modify the value range of the field.

The generation module 4033 is arranged to generate a network element model file required by a client. Alternatively, an original network element model and an imported network element model package are packaged into a new file and compressed into a client_mo_model.zip file. It is to be understood that the packaged new file may only contain the imported network element model package instead of the original network element model. Moreover, the format of the compressed file thereof is not limited to the client_mo_model.zip format.

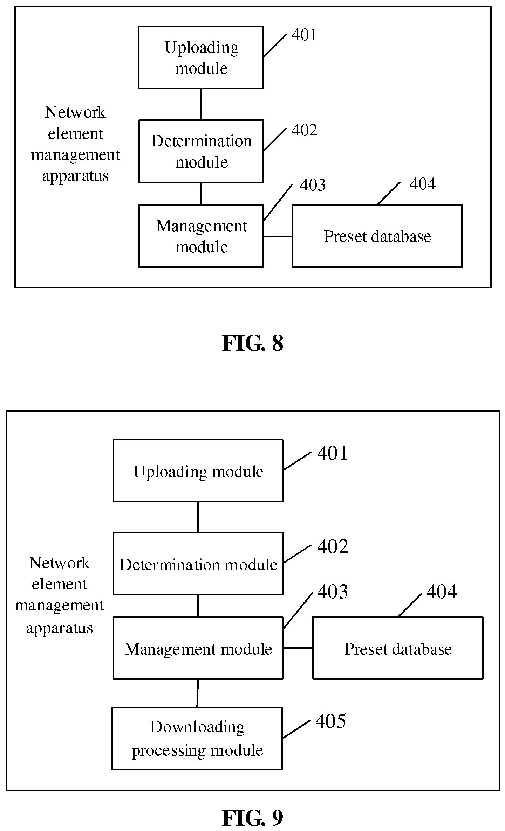

See FIG. 8, the apparatus for managing network element models in the present embodiment further includes a preset database 404. The preset database 404 contains at least one MOC database table, and the same MOC data of each of imported network element models are stored in the same MOC database table.

See FIG. 9, the apparatus for managing network element models in the present embodiment further includes a downloading processing module 405, the downloading processing module 405 is arranged to: notify a client to download the network element model file; or, receive a downloading request of a client, and transfer the network element model file to the client according to the downloading request. The downloading processing module 405 improves the autonomy of a user, and enables the user to select a network element model package to be imported as desired, thereby avoiding importing of an unnecessary network element model package by a network management system, reducing workload of the network management system, and optimizing resource configurations.

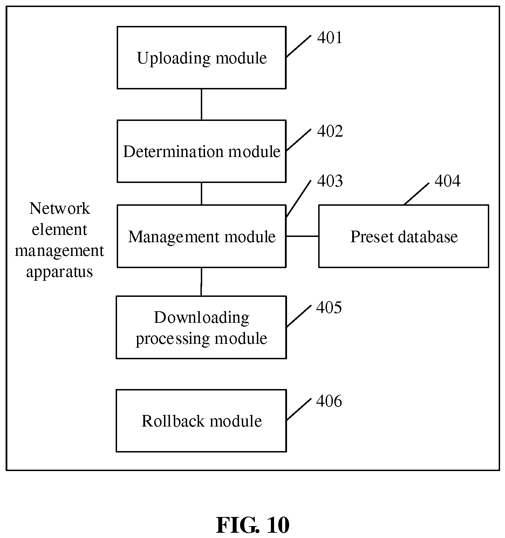

See FIG. 10, the apparatus for managing network element models in the present embodiment further includes a rollback module 406. The rollback module 406 is arranged to execute, when a user is intended to perform rollback after a new network element model package is imported, a network element rollback mechanism in Embodiment 1, and roll a current network element model version back to a network element model version at a rollback point by executing S301 to S304.

The disclosure also provides a network management system. The network management system includes a server and at least one client, the server further including a network element management apparatus provided in the disclosure.

The above is a further detailed description made on the disclosure in conjunction with specific implementation manners. It cannot be considered that the specific implementations of the disclosure are only limited to these illustrations. Several simple deductions or replacements made by those of ordinary skill in the art without departing from the concept of the disclosure should be regarded as falling within the scope of protection of the disclosure.

Those of ordinary skill in the art may understand that all or some steps in the above-mentioned method may be completed by instructing relevant hardware (such as processor) via a program, and the program may be stored in a computer-readable storage medium such as a read-only memory, a magnetic disk or an optical disk. Alternatively, all or some steps in the above-mentioned embodiments may also be implemented by using one or more integrated circuits. Correspondingly, each module/unit in the above-mentioned embodiments may be implemented in a form of hardware (for example, corresponding functions thereof are implemented via an integrated circuit) or may be implemented in a form of software function module (for example, corresponding functions thereof are implemented by executing a program/instruction stored in a memory via the processor). The embodiments of the disclosure are not limited to combination of hardware and software in any specific form.

### INDUSTRIAL APPLICABILITY

According to the method and apparatus for managing network element models provided by the disclosure, a network element model package determined to be imported is imported into a network management system, network management system database information corresponding to the network element model package is updated, and then each client of the network management system is notified to download and update a network element model. The method and apparatus for managing network element models enable decoupling of a network management system version and a network element version, so that a network management system and a network element model can be developed and operated independently. That is, it is unnecessary to take the network element model into consideration in a development stage of the network management system, and it is also unnecessary to upgrade the network management system before update of the network element model, thereby reducing the cost of an upgrade processes of the network management system and the network element, and reducing workload.

## Claims

1. A method for managing network element models, comprising:
uploading a preset network element model package;
determining, according to a preset rule, whether to import the network element model package;
determining to import the network element model package, updating a preset database, and generating a network element model file required by a client.

2. The method for managing network element models according to claim 1, wherein the network element model package comprises: a description file of network element models, a description file of the network element model package and a description file of an import behavior of the network element model package.

3. The method for managing network element models according to claim 1, wherein the preset database comprises: at least one Managed Object Class, MOC, database table, wherein the MOC database table comprises information about the imported network element models belonging to a same MOC.

4. The method for managing network element models according to claim 1, wherein updating a preset database comprises:
extracting information about each MOC in the network element model package; and
for the information about each MOC, judging whether a corresponding MOC database table is present in the database, when no corresponding MOC database table is present in the database, acquiring information about each attribute of the MOC from the network element model package, and creating the corresponding MOC database table; when the corresponding MOC database table is present in the database, checking whether a field corresponding to the information about each attribute of the MOC is present in the corresponding MOC database table, and when the field of the acquired attribute of the MOC is not present, creating the field in the corresponding MOC database table; and when the field of the acquired attribute of the MOC is present, checking whether a value range of the field satisfies a definition of the network element model, and if not, modifying the value range of the field.

5. The method for managing network element models according to claim 1, wherein determining, according to a preset rule, whether to import the network element model package comprises:
reading a description file of the network element model package in the uploaded network element model package, to obtain version information and a patch number of a network element model, comparing the version information with a present local network element model version, and selecting a network element model satisfying the following situations for importing:
when the network element model in the network element model package is not present locally, importing the network element model package; and
when the network element model in the network element model package is already present locally but the patch number in the network element model package is newer, importing the network element model package.

6. The method for managing network element models according to claim 1, wherein before uploading the preset network element model package, the method further comprises: receiving a selection instruction of a user, and uploading the network element model package selected by the user.

7. The method for managing network element models according to any one of claims 1 to 6, wherein after generating the network element model file required by the client, the method further comprises:
notifying the client to download the network element model file; or,
receiving a downloading request from the client, and transferring the network element model file to the client at the downloading request.

8. An apparatus for managing network element models, comprising:
an uploading module, arranged to upload a preset network element model package;
a determination module, arranged to determine, according to a preset rule, whether to import the network element model package; and
a management module, arranged to determine to import the network element model package, update a preset database, and generate a network element model file required by a client.

9. The apparatus for managing network element models according to claim 8, wherein the preset database comprises: at least one Managed Object Class, MOC, database table, wherein the MOC database table comprises information about the imported network element models belonging to a same MOC.

10. The apparatus for managing network element models according to claim 8, wherein the management module comprises:
an importing module arranged to import the network element model package,
an update module arranged to update the preset database, and
a generation module arranged to generate the network element model file required by the client,
wherein the update module comprises an extraction unit and a processing unit;
wherein the extraction unit is arranged to extract information about each MOC in the network element model package; and
wherein the processing unit is arranged to: for the information about each MOC, judge whether a corresponding MOC database table is present in the database; when no corresponding MOC database table is not present in the database, acquire information about each attribute of the MOC from the network element model package, create the corresponding MOC database table; when the corresponding MOC database table is present in the database, check whether a field corresponding to the information about each attribute of the MOC is present in the corresponding MOC database table, when the field of the acquired attribute of the MOC is not present, create the field in the corresponding MOC database table; when the field of the acquired attribute of the MOC is present, check whether a value range of the field satisfies a definition of the network element model, and if not, modify the value range of the field.

11. The apparatus for managing network element models according to claim 8, wherein the determination module is arranged to read a description file of the network element model package in the uploaded network element model package to obtain version information and a patch number of a network element model, compare the version information with a present local network element model version, and select a network element model satisfying the following situations for importing:
when the network element model in the network element model package is not present locally, importing the network element model package; and if a network element model in the network element model package is already present locally but the patch number in the network element model package is newer, importing the network element model package.

12. The apparatus for managing network element models according to claim 8, wherein the uploading module further comprises an instruction receiving unit and an uploading unit, wherein the instruction receiving unit is arranged to receive a selection instruction of a user, and the uploading unit is arranged to upload the network element model package according to the user instruction.

13. The apparatus for managing network element models according to any one of claims 8 to 12, further comprising: a downloading processing module,
wherein the downloading processing module is arranged to:
notify a client to download the network element model file; or,
receive a downloading request of a client, and transfer the network element model file to the client at the downloading request.
